(19) Europäisches Patentamt
European Patent Office
Office européen des brevets

(11) **EP 2 767 431 B1**

(12) **FASCICULE DE BREVET EUROPEEN**

(45) Date de publication et mention
de la délivrance du brevet:
**23.12.2015 Bulletin 2015/52**

(51) Int Cl.:
**B60L 11/18** *(2006.01)* **G06Q 10/06** *(2012.01)*
**G07B 15/00** *(2011.01)*

(21) Numéro de dépôt: **14155471.7**

(22) Date de dépôt: **17.02.2014**

(54) **Procédé d'optimisation de l'énergie de recharge et de la durée de vie de batteries électriques**

Optimierungsverfahren der Aufladeenergie und der Lebensdauer von elektrischen Batterien

Method for optimising the recharging energy and durability of electric batteries

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.02.2013 FR 1351367**

(43) Date de publication de la demande:
**20.08.2014 Bulletin 2014/34**

(73) Titulaire: **Schneider Electric Industries SAS
92500 Rueil-Malmaison (FR)**

(72) Inventeur: **Gualino, David
38050 Grenoble Cedex 9 (FR)**

(74) Mandataire: **Ilgart, Jean-Christophe et al
BREVALEX
95, rue d'Amsterdam
75378 Paris Cedex 8 (FR)**

(56) Documents cités:
**EP-A2- 1 837 944 WO-A1-2013/014930
US-A1- 2007 118 502 US-B1- 6 181 991**

**Description**

**DOMAINE TECHNIQUE**

L'invention se situe dans le domaine de l'optimisation de l'énergie de recharge et de la durée de vie de batteries électriques et concerne plus spécifiquement un procédé d'optimisation de l'énergie de recharge et de la durée de vie des batteries d'une flotte de n véhicules électriques Vi (i=1 à n), chacun desdits véhicules étant susceptible d'être utilisé pour effectuer une tournée d'une distance prédéfinie parmi une pluralité de tournées différentes, la batterie de chaque véhicule ayant une autonomie initiale auto_init(i), une autonomie maximale auto_max(i), une autonomie résiduelle avant chaque tournée auto_act(i), un état de charge SOC(i), et un état de santé SOH(i) susceptible d'évoluer au cours du temps.

L'invention s'applique plus particulièrement, mais non exclusivement, à la distribution d'énergie électrique à une ou plusieurs entités consommatrices d'énergie telles que par exemple des véhicules électriques et/ou hybrides.

L'invention concerne également un dispositif comportant des moyens pour mettre en oeuvre le procédé selon l'invention et un programme d'ordinateur enregistré sur un support et comportant des instructions pour réaliser les étapes du procédé selon l'invention lorsqu'il est exécuté sur un ordinateur.

**ÉTAT DE LA TECHNIQUE ANTÉRIEURE**

Les solutions de l'art antérieur connu pour recharger les batteries d'une ou de plusieurs entités électriques s'appuient soit selon une stratégie dite « Premier arrivé premier servi » qui consiste à allouer toute l'énergie disponible dès que celle-ci est demandée, soit selon une stratégie dite du «best-effort» qui se fonde sur une hiérarchisation des comptes client selon plusieurs niveaux de priorité qui dépendent du type de contrat de chaque client.

L'inconvénient de la première approche est de favoriser les premiers demandeurs au détriment des suivants, tandis que dans la deuxième approche, la ressource est répartie entre tous les clients en fonction des disponibilités courantes, sans prendre d'engagement sur la quantité de l'énergie fournie pendant la période de distribution.

De plus en plus d'entreprises telles que les services postaux, les hôpitaux, les transports en commun, service de location de véhicules urbains utilisent une flotte comportant plusieurs véhicules électriques. Ces véhicules doivent être rechargés régulièrement pour en assurer une disponibilité permanente.

Classiquement, afin de disposer d'une flotte toujours opérationnelle avec autonomie maximale, les véhicules sont rechargés au maximum de leurs capacités respectives. Cela conduit à dimensionner le dispositif de charge pour la capacité maximale qui permet de recharger tous les véhicules à leur capacité de recharge maximale.

Une méthode d'optimisation de la recharge d'appareils électriques est décrite dans le document FR 2519415. Dans la méthode proposée dans ce document, on connaît à l'avance une tranche horaire (dite d'heures creuses) optimisant le coût d'une recharge. Or, d'une part, une entreprise ne peut pas immobiliser toute sa flotte pendant cette tranche horaire, et d'autre part, la capacité de charge pendant cette tranche peut être insuffisante pour répondre aux besoins de recharge. En outre, la méthode décrite dans le document cité, part du principe que le coût de l'énergie est fixe, et, de ce fait ne tient pas compte des variations de ce coût au cours du temps. Par conséquent, cette méthode ne prend pas en compte la variabilité de l'énergie pour optimiser la charge et la durée de vie des batteries à recharger.

Un but de l'invention est de rentabiliser au mieux le nombre de véhicules à recharger en maximisant la durée de vie de batteries de ces véhicules et en profitant au maximum des tarifs les plus bas de l'énergie sachant qu'on ne souhaite pas une autonomie maximale mais simplement assurer un trajet déjà connu.

En résumé, l'invention a pour but:

- d'optimiser la durée de vie des batteries en utilisant au mieux ces batteries,
- d'optimiser la recharge elle-même en la positionnant au mieux dans le temps pour réduire la facture d'électricité.
- de minimiser l'empreinte carbone.

Dans tous les cas, l'invention vise à respecter la contrainte de disponibilité de la flotte pour les tournée prévues le lendemain en prenant en compte un coût variable de l'électricité selon les plages horaires, ainsi qu'un état de charge et état de santé de la flotte en fin de journée, et un planning des déplacements du lendemain.

Un autre but de l'invention est de proposer une méthode qui rentabilise au mieux une flotte de véhicules électriques.

Le document US 6181991 B1 décrit un système permettant de sélectionner un véhicule dans un parc de véhicules éléctriques pour parcourir une distance donnée en fonction de la position de départ et celle d'arrivée qui sont fournies par un utilisateur et en fonction de la charge électrique disponible de chaque véhicule.

Le document US 2007/011 8502 A1 décrit une méthode et un système de planification des missions d'une flotte de véhicule consistant à définir un ensemble de modèles de missions à accomplir, un ensemble de modèles définissant la possibilité de remplir les missions prédéfinies et une procédure de sélection permettant de définir les capacités nécessaires à la réalisation de chaque mission.

Le document EP 1837944 A3 décrit un appareil de commande de l'alimentation électrique de plusieurs batteries montées en parallèle comportant un module destiné à évaluer la charge et la décharge de chaque batterie.

Le document WO 2013/014930 A1 décrit un dispositif de charge de batteries muni d'un système de contrôle de l'état des batteries à charger et des interrupteurs reliés auxdites batteries, lesdits interrupteurs étant commandés en fonction de l'état desdites batteries.

## EXPOSÉ DE L'INVENTION

Le but de l'invention est atteint au moyen d'un procédé d'optimisation de l'énergie de recharge et de la durée de vie des batteries d'une flotte de N véhicules électriques susceptibles, chacun, d'être utilisé pour effectuer une tournée d'une distance prédéfinie parmi une pluralité de tournées différentes, la batterie de chaque véhicule ayant une autonomie initiale auto_init(i), une autonomie maximale, une autonomie résiduelle après chaque tournée, et une capacité de charge SOH(i) susceptible d'évoluer au cours du temps,

Le procédé selon l'invention comporte les étapes suivantes:

pour chaque tournée et pour chaque véhicule,

- définir une autonomie souhaitée auto_souhait(i),
- classer les tournées à effectuer selon un ordre décroissant des autonomies souhaitées,
- calculer l'autonomie résiduelle et l'autonomie maximale de chaque véhicule après chaque tournée, et;

pour effectuer une tournée donnée,

- calculer, pour chaque véhicule disponible une charge optimal SOC_nec_opt(i) en fonction de l'autonomie souhaitée auto_souhait(i) et de l'autonomie maximale et,
- calculer un indicateur du vieillissement de la batterie en fonction de ladite charge optimale et de la charge résiduelle à la fin de la tournée,
- choisir un véhicule ayant le plus petit indicateur de vieillissement pour effectuer ladite tournée donnée.

Dans un mode de réalisation de l'invention, la charge optimale SOC_nec_opt(i) est calculée par la formule suivante:

$$\text{SOC\_nec\_opt(i)}=100-(50*(\text{auto\_max(i)}-\text{auto\_souhait(i)})/\text{auto\_max(i)}.$$

Selon une autre caractéristique de l'invention, la charge optimale après recharge est corrigée pour chaque véhicule en fonction de sa charge actuelle. La charge optimale corrigée est donnée par la formule suivante : SOC_nec_opt_cor(i)=max (SOC(i), SOC_nec_opt(i))

le vieillissement d'un véhicule est calculé par la formule :

$$\mathbf{Vieillissement} = \int_{\mathbf{SOC_{fin/tournée(i)}}}^{\mathbf{SOC_{nec_{opt_{cor(i)}}}}} \mathbf{PVi}$$

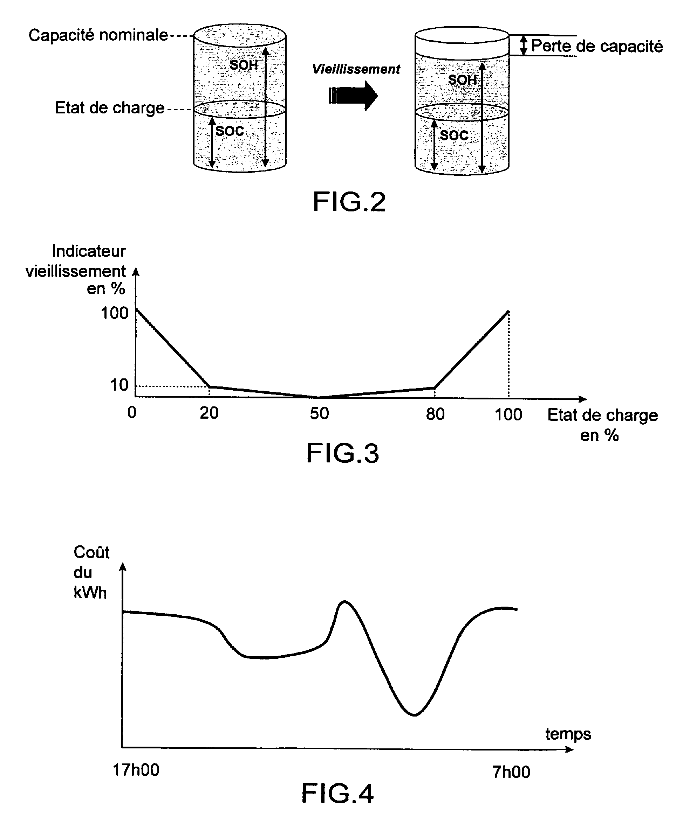

c'est le vieillissement qui est calculé par cette formule ; PVi est défini sur la courbe de la figure 3, PVi est un paramètre représentant le vieillissement instantané du véhicule à un état de charge donné.

L'autonomie résiduelle avant chaque tournée de chaque véhicule est calculée par la formule : auto_act(i)=SOC(i)*SOH(i)*auto_init(i),
et l'autonomie maximale de chaque véhicule est calculée par la formule : auto_max(i)=SOH(i)*auto_init(i).

Le procédé selon l'invention est mis en oeuvre par un dispositif comportant un module comportant un logiciel adapté pour définir une autonomie souhaitée auto_souhait(i) pour chaque tournée et pour chaque véhicule, classer les tournées à effectuer selon un ordre décroissant des autonomies souhaitées, calculer l'autonomie résiduelle et l'autonomie maximale de chaque véhicule avant chaque tournée, calculer, pour chaque véhicule disponible pour effectuer une tournée donnée, une charge optimale SOC_nec_opt(i) en fonction de l'autonomie souhaitée auto_souhait(i) et de l'autonomie maximale, calculer un indicateur du vieillissement de la batterie en fonction de la charge optimale SOC_nec_opt(i) et de la charge résiduelle à la fin de la tournée, et pour choisir un véhicule ayant le plus petit indicateur de vieillissement pour effectuer ladite tournée donnée.

## BRÈVE DESCRIPTION DES DESSINS

D'autres caractéristiques et avantages de l'invention ressortiront de la description qui va suivre, prise à titre d'exemple non limitatif, en référence aux figures annexées dans lesquelles:

- la figure 1 illustre schématiquement une architecture globale d'un système de recharge des batteries d'une flottes de plusieurs véhicules électriques;
- la figure 2 illustre schématiquement l'évolution de l'état de charge d'une batterie d'un véhicule,
- La figure 3 représente une courbe expérimentale illustrant l'état de vieillissement d'une batterie en fonction de son état de charge,
- la figure 4 représente un exemple de courbe illustrant les variations du coût d'énergie en fonction du temps pendant une durée de recharge,
- la figure 5 illustre un découpage de la durée de recharge de la figure 4 dans un exemple de mise en oeuvre du procédé selon l'invention,
- la figure 6 est un organigramme illustrant les étapes de calcul des autonomies des véhicules de la flotte et d'affectation desdits véhicules à des tournées dans un exemple de mise en oeuvre du procédé selon l'invention,
- la figure 7 est un organigramme illustrant le positionnement dans le temps des recharges nécessaires,

## EXPOSÉ DÉTAILLÉ DE MODES DE RÉALISATION PARTICULIERS

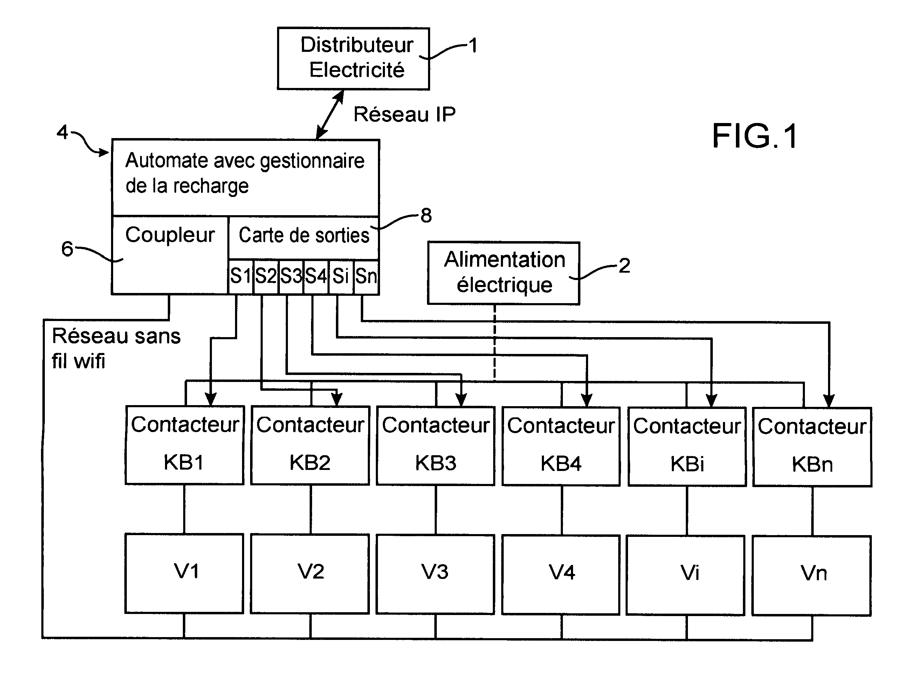

L'invention sera décrite en référence à la figure 1 illustrant schématiquement un système de recharge des batteries d'une flotte de n véhicules (V1, V2...Vn) reliés à une source d'alimentation électrique 2. Ce système comporte en outre un automate 4 avec gestionnaire de recharge muni d'un coupleur 6, d'une carte de sortie 8 ayant n sortie S1, S2 ....Sn reliées respectivement à n contacteurs KB1, KB2,...KBn, chaque contacteur KBi étant commandé par l'automate 4 pour relier (déconnecter) un véhicule Vi à (de) la source d'alimentation électrique 2. L'automate 4 est connecté, via un réseau de télécommunication, tel que l'internet, à un site central 1 de gestion d'un distributeur d'électricité. Le coupleur 6 est relié en outre à chaque véhicule Vi via une connexion sans fil (Wifi par exemple).

### calcul des autonomies des différentes batteries

La batterie d'un véhicule Vi se caractérise par une autonomie initiale auto_init(i), une autonomie maximale auto_max(i), une autonomie résiduelle avant une tournée auto_act(i), un état de charge SOC(i), et un état de santé SOH(i). Ces paramètres évoluent au cours du temps en fonction du vieillissement de la batterie qui se traduit par une perte de capacité de charge comme cela est illustré schématiquement par la figure 2.

Avant chaque tournée, l'autonomie résiduelle auto_act(i) et l'autonomie maximale auto_max(i) d'une batterie sont calculées en fonction de sa charge SOC(i) et de son état de santé SOH(i).

La figure 3 représente une courbe expérimentale illustrant l'état de vieillissement d'une batterie en fonction de son état de charge. Comme on peut le voir sur cette courbe, une décharge totale (0% de la capacité de charge) ou une charge complète (100% de la capacité de charge) accélère le vieillissement de la batterie paramètre PVi (indicateur de vieillissement) à 100%. Par contre, le paramètre PVi ne dépasse pas 10% lorsque la charge et la décharge de la batterie s'effectuent respectivement entre 20% et 80% de sa capacité totale. Par conséquent, il est largement préférable de cycler autour des 50% de charge et d'éviter les fortes charges ou fortes décharges. Il en résulte que pour effectuer une tournée, il convient de sélectionner un véhicule dont la batterie va cycler à des niveaux de charge où le paramètre PVi est le plus faible.

### Affectation des véhicules aux tournées

Pour affecter de façon optimale un véhicule à une tournée, on classe des tournées à effectuer dans un ordre décroissant des autonomies souhaitées auto_souhait(i). Ensuite pour chaque tournée, en partant de la plus haute, on sélectionne l'ensemble des véhicules capables d'effectuer cette tournée. Pour chacun des véhicules Vi (i= 1 à n), on calcule la charge optimale de batterie en fin de la charge SOC_nec_opt(i) pour optimiser sa durée de vie, c'est-à-dire, en plaçant son fonctionnement sur la tournée à effectuer autour des 50% de charge.

Cette charge optimale est calculée par la formule :

$$SOC\_nec\_opt(i)=100-(50*(auto\_max(i)-auto\_souhait(i))/auto\_max(i).$$

En effet, comme indiqué précédemment, pour minimiser le vieillissement calendaire d'une batterie et augmenter ainsi sa durée de vie de 20 à 30%, il faut limiter au maximum les forts états de charge et forts états de décharge. La charge optimale après recharge est corrigée pour chaque véhicule en fonction de sa charge actuelle selon l'expression suivante :

$$SOC\_nec\_opt\_cor(i)=max(SOC(i), SOC\_nec\_opt(i))$$

En effet, on ne peut pas viser un état de charge inférieur à l'état de charge actuel.

On calcule ensuite le vieillissement associé pour chacun de ces véhicules s'il était sélectionné pour la tournée envisagée en fonction de la charge avant et la charge après la tournée.

le vieillissement est calculé par la formule suivante:

$$\textbf{Vieillissement} = \int_{\textbf{SOC}_{\textbf{fin/tournée(i)}}}^{\textbf{SOC}_{\textbf{mec}}_{\textbf{opt}_{\textbf{cor(i)}}}} \textbf{PVi}$$

Avec SOC_fin_tournée(i)=SOC_nec_opt_cor(i)-100*auto_souhait(i)/auto_max(i).

Positionnement dans le temps des recharges nécessaires

La figure 4 illustre schématiquement une courbe décrivant le prix le l'énergie en fonction du temps pour une période de recharge potentielle, par exemple de 17h00 à 7h00 le lendemain.

Cette courbe est soit connue à partir d'un abonnement électrique donné, soit correspond à une information communiquée par un agrégateur d'énergie.

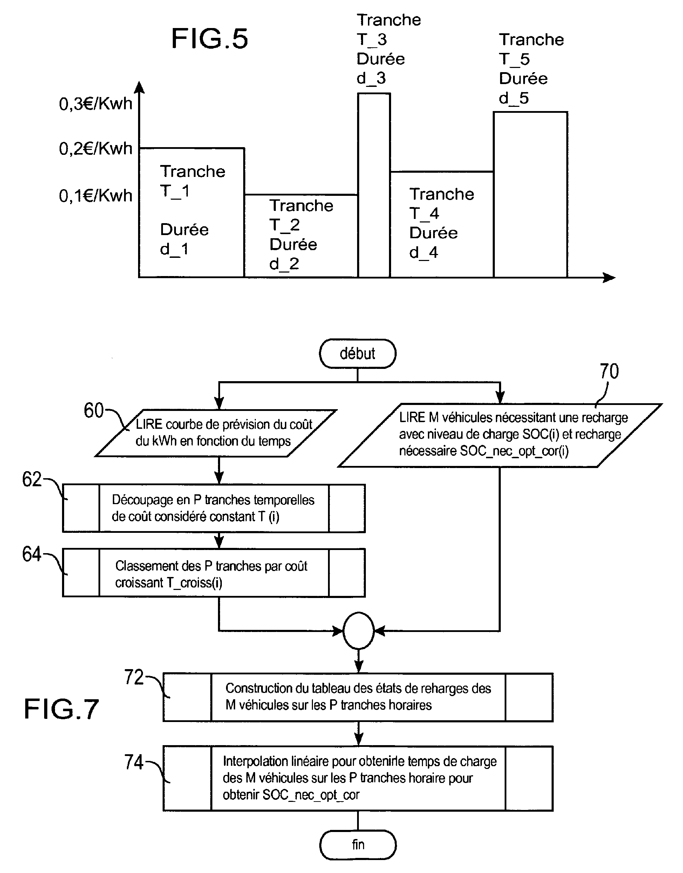

Une première étape consiste à découper cette courbe en P tranches horaires T_i de durée d_i comme cela est illustré par la figure 5.

On classe alors ces tranches dans l'ordre croissant, c'est-à-dire de la tranche horaire la moins chère à la tranche horaire la plus chère. On considère un ensemble de M (M<=N) véhicules de la flotte nécessitant une recharge qui partent d'un état de charge SOC(j). On calcule, pour chaque véhicule, son nouvel état de charge en considérant une recharge de 3kW pendant la durée d_i de la tranche horaire T_i la moins chère. Dès qu'un véhicule V_j (j<=M) atteint un niveau de charge supérieur à sa charge optimale Soc_nec_opt_cor(j), on arrête la recharge. On ajuste alors la durée d_i, via une règle de trois, pour obtenir la valeur exacte de la charge optimale Soc_nec_opt_cor(j).

Il est à noter que cet ajustement n'est nécessaire que si l'on considère des tranches horaires de longues durées.

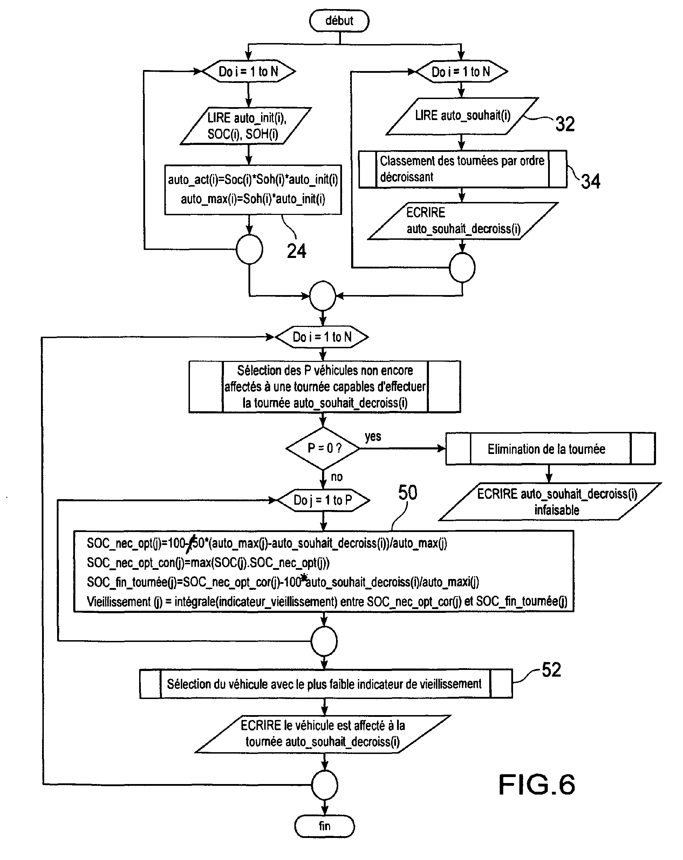

Le calcul des autonomies des différentes batteries et l'affectation des véhicules aux tournées seront décrits par référence à la figure 6 illustrant un algorithme décrivant les étapes nécessaires à cet effet. Cet algorithme comporte une première branche comportant les étapes de calcul de l'autonomie maximale et de l'autonomie résiduelle de chaque batterie avant chaque tournée, et une deuxième branche comportant une étape de classement des tournées à effectuer par ordre décroissant des autonomies souhaitées pour effectuer une tournée donnée.

Cet algorithme s'insère dans l'automate 4 qui remplit la fonction de gestionnaire d'énergie. L'automate 4 commande alors l'ensemble de contacteurs KBi (i= 1 à n) pour alimenter ou non le véhicule qui lui est relié. Chaque véhicule Vi i= 1 à n) communique avec l'automate 4 via un réseau sans fil de type Wifi pour lui remonter les informations d'état de charge. L'état de santé de chaque batterie peut également être remonté ou calculé par la borne de recharge elle-même.

Dans un autre mode de réalisation, les utilisateurs saisissent l'état de charge des véhicules en fin de tournée au moyen d'une interface utilisateur reliée à l'automate. Ce dernier communique avec le site central 1 de gestion du distributeur d'énergie qui envoie les différents indices tarifaires et leurs horaires associés sous forme de tables.

En référence à la figure 6, dans la première branche, pour chaque véhicule Vi (i= 1 à n) l'automate 4 scanne (étape 20) les sorties du coupleur 6 et lit (étape 22) les valeurs respectives de l'autonomie initiale auto_init(i), de la charge SOC(i) et de l'état de santé SOH(i), de chaque batterie.

A l'étape 24, pour chaque véhicule Vi (i= 1 à n) l'automate 4 calcule l'autonomie résiduelle actuelle auto_act(i) de la batterie de chaque véhicule Vi et l'autonomie maximale auto_max(i) de chaque batterie par les formules suivantes :

$$auto\_act(i)= SOC(i)*SOH(i)*auto\_init(i);$$

$$auto\_max(i)=SOH(i)*auto\_init(i).$$

Parallèlement, dans la deuxième branche de l'algorithme, à l'étape 30, pour une tournée donnée, l'automate 4 lit (étape 32) le paramètre auto_souhait(i) représentant l'autonomie souhaitée pour effectuer la tournée donnée, et classe (étape 34) les tournées à effectuer dans un ordre décroissant des paramètres auto_souhait(i).

Pour i= 1 à n, à l'étape 40, l'automate 4 sélectionne un nombre P de véhicules non encore utilisés capables d'effectuer la tournée donnée.

A l'étape 42, l'automate 4 vérifie la valeur du nombre P.

Si P est nul, cela signifie qu'aucun véhicule n'est capable d'effectuer ladite tournée avec l'autonomie souhaitée. La tournée avec l'autonomie souhaitée est alors éliminée (étape 44) et l'automate 4 indique que ladite tournée ne peut être réalisée (étape 46).

Si P est non nul, cela signifie que des véhicules sont susceptibles d'effectuer ladite tournée avec l'autonomie souhaitée.

Pour chaque véhicule Vj (j allant de 1 à P) (étape 50), l'automate 4 calcule la charge optimale SOC_nec_opt(j) par la formule suivante:

$$SOC\_nec\_opt(j)=100-(50*(auto\_max(j)-auto\_souhait(j))/auto\_max(j)$$

La charge optimale après recharge est ensuite corrigée pour chaque véhicule en fonction de sa charge actuelle selon la formule suivante :

$$SOC\_nec\_opt\_cor(j)=max\ (SOC(j),\ SOC\_nec\_opt(j))$$

Et la charge en fin de tournée est calculée par la formule :

$$Soc\_fin\_tournée(j)=Soc\_nec\_opt\_cor(j)-100*auto\_souhait\_decroiss(i)/auto\_max(j).$$

Le vieillissement d'un véhicule est calculé par la formule :

$$\textbf{Vieillissement} = \int_{\textbf{SOC}_{\textbf{fin/tournée}(i)}}^{\textbf{SOC}_{\textbf{nec}_{\textbf{opt}_{\textbf{cor}(i)}}}} \textbf{PVi}$$

avec PVi comme paramètre de vieillissement instantanée.

A l'étape 52, l'automate 4 sélectionne le véhicule ayant le plus petit vieillissement pour effectuer la tournée considérée et indique le véhicule sélectionné (étape 54).

Le positionnement dans le temps des recharges nécessaires sera décrit par référence à la figure 7 illustrant un algorithme décrivant les étapes nécessaires à cet effet. Cet algorithme comporte une première branche comportant les étapes de définitions de tranches temporelles en fonction du coût de l'énergie, et une deuxième branche comportant une étape de recherche des véhicules pour effectuer une tournée donnée.

En référence à la figure 7, dans la première branche, l'automate 4 lit une courbe indiquant l'évolution du cout du KWh en fonction du temps (étape 60).

A l'étape 62, l'automate 4 découpe la courbe lue en P tranches horaires T_i de durée d_i comme cela est illustré par la figure 5.

A l'étape 64, l'automate 4 classe les tranches définies par coût croissant, c'est-à-dire de la tranche horaire la moins chère à la tranche horaire la plus chère.

Parallèlement, dans la deuxième branche de l'algorithme, à l'étape 70, l'automate 4 détermine M véhicules nécessitant une recharge en partant d'un niveau de charge Soc(i) et une recharge nécessaire SOC_nec_opt_cor(i).

A l'étape 72, l'automate 4 construit un tableau des états de recharge des M véhicules sur les P tranches horaires.

A l'étape 74, l'automate 4 effectue une interpolation linéaire pour obtenir le temps de charge des M véhicules sur les P tranches horaires pour obtenir SOC_nec_opt_cor.

## Revendications

1. Procédé d'optimisation de l'énergie de recharge et de la durée de vie des batteries d'une flotte de (n) véhicules électriques (Vi (i=1 à n)), chacun desdits véhicules étant susceptible d'être utilisé pour effectuer une tournée d'une distance prédéfinie parmi une pluralité de tournées différentes, la batterie de chaque véhicule ayant une autonomie initiale (auto_init(i)), une autonomie maximale (auto_max(i)), une autonomie résiduelle avant chaque tournée (auto_act(i)), un état de charge (SOC(i)), et un état de santé (SOH(i)) susceptible d'évoluer au cours du temps, procédé **caractérisé par** les étapes suivantes:

   pour chaque tournée et pour chaque véhicule,

      - définir (32) une autonomie souhaitée (auto_souhait(i)),
      - classer (34) les tournées à effectuer selon un ordre décroissant des autonomies souhaitées,
      - calculer (24) l'autonomie résiduelle et l'autonomie maximale de chaque véhicule avant chaque tournée, et;

   pour effectuer une tournée donnée,
   calculer (50), pour chaque véhicule (Vi) disponible pour effectuer une tournée donnée une charge optimale (SOC_nec_opt(i)) égale à la quantité d'énergie strictement nécessaire pour assurer la tournée donnée en fonction de l'autonomie souhaitée et de l'autonomie maximale et,

      - calculer (50) un indicateur représentatif du vieillissement de la batterie en fonction de ladite charge optimale et de la charge résiduelle à la fin de la tournée,
      - choisir (52) un véhicule ayant le plus petit indicateur de vieillissement pour effectuer ladite tournée donnée.

2. Procédé selon la revendication 1 dans lequel, la charge optimale (SOC_nec_opt(i)) est calculée par la formule suivante:

$$SOC\_nec\_opt(i)=100-50*(auto\_max(i)-auto\_souhait(i))/auto\_max(i)$$

3. Procédé selon la revendication 2 dans lequel la charge optimale est corrigée pour chaque véhicule en fonction de sa charge actuelle selon la formule suivante :

$$SOC\_nec\_opt\_cor(i)=max(SOC(i),\ SOC\_nec\_opt(i))$$

4. Procédé selon la revendication 3 dans lequel l'indicateur de vieillissement est calculé en fonction d'un paramètre (PVi) représentant le vieillissement instantané du véhicule à un état de charge donné par la formule :

$$\text{Vieillissement} = \int_{SOC_{fin\prime tournée(i)}}^{SOC_{nec opt_{cor(i)}}} PVi$$

avec SOC_fin_tournée (i) = SOC_nec_opt_cor(i)-100*auto_souhait(i)/auto_max(i).

5. Procédé selon la revendication 1 dans lequel l'autonomie résiduelle de chaque véhicule est calculée par la formule:

$$\text{auto\_act(i)=SOC(i)*SOH(i)*auto\_init(i),}$$

et l'autonomie maximale de chaque véhicule est calculée par la formule :

$$\text{auto\_max(i)=SOH(i)*auto\_init(i).}$$

6. Dispositif d'optimisation de l'énergie de recharge et de la durée de vie des batteries d'une flotte de (n) véhicules électriques (Vi (i=1 à n)), chacun desdits véhicules étant susceptible d'être utilisé pour effectuer une tournée d'une distance prédéfinie parmi une pluralité de tournées différentes, et la batterie de chaque véhicule (Vi) ayant une autonomie initiale (auto_init(i)), une autonomie maximale, une autonomie résiduelle avant chaque tournée, une capacité de charge (SOC(i)), et un état de santé (SOH(i)) susceptible d'évoluer au cours du temps, dispositif **caractérisé par**:

- un module (4) comportant un logiciel adapté pour définir une autonomie souhaitée (auto_souhait(i)) pour chaque tournée et pour chaque véhicule, classer les tournées à effectuer selon un ordre décroissant des autonomies souhaitées, calculer l'autonomie résiduelle et l'autonomie maximale de chaque véhicule avant chaque tournée, calculer, pour chaque véhicule disponible pour effectuer une tournée donnée, une charge optimale (SOC_nec_opt(i)) égale à la quantité d'énergie strictement nécessaire pour assurer la tournée donnée en fonction de l'autonomie souhaitée (auto_souhait(i)) et de l'autonomie maximale, calculer un indicateur représentatif du vieillissement de la batterie en fonction de la charge optimale (SOC_nec_opt(i)) et de la charge résiduelle à la fin de la tournée, et pour choisir un véhicule ayant le plus petit indicateur de vieillissement pour effectuer ladite tournée donnée.

7. Programme d'ordinateur enregistré sur un support et comportant des instructions pour réaliser les étapes du procédé selon la revendication 1 lorsqu'il est exécuté sur un ordinateur.

**Patentansprüche**

1. Verfahren zum Optimieren der Nachladeenergie und der Lebensdauer der Batterien einer Flotte von (n) Elektrofahrzeugen (Vi (i=1 bis n)), wobei jedes der Fahrzeuge dazu verwendet werden kann, eine Tour mit einer vorbestimmten Entfernung aus einer Mehrzahl von verschiedenen Touren zu fahren, wobei die Batterie eines jeden Fahrzeugs eine anfängliche Reichweite (auto_init(i)), eine maximale Reichweite (auto_max(i)), eine vor jeder Tour verbleibende Reichweite (auto_act(i)), einen Ladezustand (SOC(i)) und einen Intaktheitszustand (SOH(i)) aufweist, der sich im Laufe der Zeit ändern kann,
wobei das Verfahren
**gekennzeichnet ist durch**
die nachfolgenden Schritte,
die bei jeder Tour und für jedes Fahrzeug erfolgen:

- Definieren (32) einer gewünschten Reichweite (auto_wunsch (i)),
- Ordnen (34) der zu fahrenden Touren nach einer abnehmenden Reihenfolge von gewünschten Reichweiten,
- Berechnen (24) der verbleibenden Reichweite und der maximalen Reichweite eines jeden Fahrzeugs vor jeder Tour, und

zum Fahren einer gegebenen Tour
für jedes Fahrzeug (Vi), das zum Fahren einer gegebenen Tour verfügbar ist, Berechnen (50) einer optimalen Aufladung (SOC_nec opt(i)), die gleich der strikt erforderlichen Energiemenge ist, um die gegebene Tour in Abhängigkeit von der gewünschten Reichweite und der maximalen Reichweite sicherzustellen, und

- Berechnen (50) eines Indikators, der repräsentativ ist für die Alterung der Batterie in Abhängigkeit von der optimalen Aufladung und der am Ende der Tour verbleibenden Aufladung,
- Auswählen (52) eines Fahrzeugs mit dem geringsten Alterungsindikator zum Fahren der gegebenen Tour.

2. Verfahren nach Anspruch 1, wobei die optimale Aufladung (SOC_nec_opt(i)) berechnet wird nach der nachfolgenden Formel:

$$SOC\_nec\_opt(i) = 100 - 50 * (auto\_max(i) - auto\_wunsch(i)) / auto\text{-}max(i)$$

3. Verfahren nach Anspruch 2, wobei die optimale Aufladung für jedes Fahrzeug in Abhängigkeit von seiner aktuellen Aufladung korrigiert wird nach der nachfolgenden Formel:

$$SOC\_nec\_opt\_cor(i) = max (SOC(i), SOC\_nec\_opt(i))$$

4. Verfahren nach Anspruch 3, wobei der Alterungsindikator berechnet wird in Abhängigkeit von einem Parameter (PVi), der repräsentativ ist für die momentane Alterung des Fahrzeugs bei einem gegebenen Aufladezustand, nach der nachfolgenden Formel:

$$\text{Alterung} = \int_{SOC_{Ende/Tour(i)}}^{SOCnec_{opt_{cor(i)}}} PVi$$

mit SOC_Ende_Tour(i) = SOC_nec_opt_cor(i) - 100 * auto_wunsch(i) / auto_max(i).

5. Verfahren nach Anspruch 1, wobei die verbleibende Reichweite eines jeden Fahrzeugs berechnet wird nach der Formel:

$$auto\_act(i) = SOC(i) * SOH(i) * auto\_init(i),$$

und die maximale Reichweite eines jeden Fahrzeugs berechnet wird nach der Formel:

$$auto\_max(i) = SOH(i) * auto\_init(i).$$

6. Vorrichtung zum Optimieren der Nachladeenergie und der Lebensdauer der Batterien einer Flotte von (n) Elektrofahrzeugen (Vi (i=1 bis n)), wobei jedes der Fahrzeuge dazu verwendet werden kann, eine Tour mit einer vorbestimmten Entfernung aus einer Mehrzahl von verschiedenen Touren zu fahren, wobei die Batterie eines jeden Fahrzeugs (Vi) eine anfängliche Reichweite (auto_init(i)), eine maximale Reichweite, eine vor jeder Tour verbleibende Reichweite, eine Ladekapazität (SOC(i)) und einen Intaktheitszustand (SOH(i)) aufweist, der sich im Laufe der Zeit ändern kann,
wobei die Vorrichtung **gekennzeichnet ist durch**:

- ein Modul (4) mit einer Software, die dazu ausgelegt ist, eine gewünschte Reichweite (auto-wunsch(i)) für jede Tour und für jedes Fahrzeug zu definieren, die zu fahrenden Touren nach einer abnehmenden Reihenfolge von gewünschten Reichweiten zu ordnen, die verbleibende Reichweite und die maximale Reichweite eines jeden Fahrzeugs vor jeder Tour zu berechnen, für jedes Fahrzeug, das zum Fahren einer gegebenen Tour verfügbar ist, eine optimale Aufladung (SOC_nec_opt(i)) zu berechnen, die gleich der strikt erforderlichen Energiemenge ist, um die gegebene Tour in Abhängigkeit von der gewünschten Reichweite (auto-wunsch(i)) und der maximalen Reichweite sicherzustellen, einen Indikator zu berechnen, der repräsentativ ist für die Alterung der Batterie in Abhängigkeit von der optimalen Aufladung (SOC_nec_opt(i)) und von der am Ende der Tour verbleibenden Aufladung, und um ein Fahrzeug mit dem geringsten Alterungsindikator zum Fahren der gegebenen Tour auszuwählen.

7. Computerprogramm, das auf einem Datenträger abgespeichert ist und Anweisungen enthält, um beim Ausführen auf einem Computer die Schritte des Verfahrens nach Anspruch 1 durchzuführen.

**Claims**

1. Method for optimizing the recharging energy and lifetime of batteries of a fleet of (n) electric vehicles (Vi(i=1-n)), each one of said vehicles being likely to be used to perform a round having a predetermined distance among a plurality of different rounds, the battery of each vehicle having an initial autonomy (auto_init(i)), a maximum autonomy (auto_maxi(i)), a residual autonomy before each round (auto_act(i)), a state of charge (SOC(i)), and a state of health (SOH(i)) likely to change over time, the method being **characterised by** the following steps of:

   for each round and for each vehicle,

   - defining (32) a desired autonomy (auto_desired(i)),
   - classifying (34) the rounds to be performed in a decreasing order of the desired autonomies,
   - calculating (24) the residual autonomy and the maximum autonomy of each vehicle before each round, and;

   to perform a given round,
   calculating (50), for each vehicle (vi) being available to perform a given round, an optimum charge (SOC_nec_opt(i)) equal to the quantity of energy strictly required to ensure the given round as a function of the desired autonomy and the maximum autonomy and,

   - calculating (50) an indicator representative of the ageing of the battery as a function of said optimum charge and residual charge at the end of the round,
   - choosing (52) a vehicle having the smallest ageing indicator to perform said given round.

2. Method according to claim 1, wherein the optimum charge (SOC_nec_opt(i)) is calculated by the following formula:

$$SOC\_nec\_opt(i) = 100 - 50 * (auto\_max(i) - auto\_desired(i)) / auto\_max(i)$$

3. Method according to claim 2, wherein the optimum charge is corrected for each vehicle as a function of its current charge according to the following formula:

$$Soc\_nec\_opt\_cor(i) = max(SOC(i), SOC\_nec\_opt(i))$$

4. Method according to claim 3, wherein the ageing indicator is calculated as a function of a parameter (PVi) representing the instant ageing of the vehicle at a state of charge given by the formula:

$$Ageing = \int_{SOC_{end'round\,(i)}}^{SOC_{nec_{opt_{cor(i)}}}} PVi$$

with soc_end_round(i)=soc_nec_opt_cor(i)-100* auto_desired(i)/auto_max(i).

**5.** Method according to claim 1, wherein the residual autonomy of each vehicle is calculated by the formula:

$$auto\_act(i)=SOC(i)*SOH(i)*auto\_init(i),$$

and the maximum autonomy of each vehicle is calculated by the formula:

$$auto\_max(i)=SOH(i)*auto\_init(i).$$

**6.** Device for optimizing the recharging energy and lifetime of batteries of a fleet of (n) electric vehicles (Vi (i=1-n)), each one of said vehicles being likely to be used to perform a round having a predetermined distance among a plurality of different rounds, and the battery of each vehicle (vi) having an initial autonomy (auto_ini(i)), a maximum autonomy, a residual autonomy before each round, a state of charge (SOC(i)), and a state of health (SOH(i)) likely to change over time,
the device being **characterised in that**:

- a module (4) comprising software adapted to define a desired autonomy (auto_desired (i)) for each round and for each vehicle, classify the rounds to be performed in a decreasing order of the desired autonomies, calculate the residual autonomy and the maximum autonomy of each vehicle before each round, calculate, for each vehicle being available to perform a given round, an optimum charge (SOC_nec_opt(i)) equal to the quantity of energy strictly required to ensure a given round as a function of the desired autonomy (auto_desired(i)) and the maximum autonomy, calculate an indicator representative of the ageing of the battery as a function of the optimum charge (SOC-nec-optical(i)) and the residual charge at the end of the round, and choose a vehicle having the smallest ageing indicator to perform said given round.

**7.** Computer program recorded on a medium and including instructions to implement the steps of the method according to claim 1 when run on a computer.

FIG.1

Capacité nominale---

SOH

Vieillissement

SOH

Perte de capacité

Etat de charge---

SOC

SOC

## FIG.2

Indicateur
vieillissement
en %

100

10

0    20    50    80    100    Etat de charge
en %

## FIG.3

Coût
du
kWh

temps

17h00    7h00

## FIG.4

## FIG.5

Tranche
T_3
Durée
d_3

Tranche
T_5
Durée
d_5

0,3€/Kwh

0,2€/Kwh

0,1€/Kwh

Tranche
T_1

Durée
d_1

Tranche
T_2
Durée
d_2

Tranche
T_4
Durée
d_4

---

début

60 — LIRE courbe de prévision du coût
du kWh en fonction du temps

70

LIRE M véhicules nécessitant une recharge
avec niveau de charge SOC(i) et recharge
nécessaire SOC_nec_opt_cor(i)

62 — Découpage en P tranches temporelles
de coût considéré constant T (i)

64 — Classement des P tranches par coût
croissant T_croiss(i)

## FIG.7

72 — Construction du tableau des états de reharges des
M véhicules sur les P tranches horaires

74 — Interpolation linéaire pour obtenirle temps de charge
des M véhicules sur les P tranches horaire pour
obtenir SOC_nec_opt_cor

fin

14

début

Do i = 1 to N

LIRE auto_init(i), SOC(i), SOH(i)

auto_act(i)=Soc(i)*Soh(i)*auto_init(i)
auto_max(i)=Soh(i)*auto_init(i)

24

Do i = 1 to N

LIRE auto_souhait(i) 32

Classement des tournées par ordre décroissant 34

ECRIRE auto_souhait_decroiss(i)

Do i = 1 to N

Sélection des P véhicules non encore affectés à une tournée capables d'effectuer la tournée auto_souhait_decroiss(i)

P = 0 ? — yes → Elimination de la tournée

ECRIRE auto_souhait_decroiss(i) infaisable

no

Do j = 1 to P 50

SOC_nec_opt(j)=100-50*(auto_max(j)-auto_souhait_decroiss(i))/auto_max(j)
SOC_nec_opt_con(j)=max(SOC(j).SOC_nec_opt(j))
SOC_fin_tournée(j)=SOC_nec_opt_cor(j)-100*auto_souhait_decroiss(i)/auto_maxi(j)
Vieillissement (j) = intégrale(indicateur_vieillissement) entre SOC_nec_opt_cor(j) et SOC_fin_tournée(j)

Sélection du véhicule avec le plus faible indicateur de vieillissement 52

ECRIRE le véhicule est affecté à la tournée auto_souhait_decroiss(i)

fin

FIG.6

## RÉFÉRENCES CITÉES DANS LA DESCRIPTION

**Documents brevets cités dans la description**

- FR 2519415
- US 6181991 B1
- US 20070118502 A1
- EP 1837944 A3
- WO 2013014930 A1